# EUROPEAN PATENT SPECIFICATION

(11) **EP 1 269 603 B1**
(45) Date of publication and mention of the grant of the patent: **28.03.2007**
(21) Application number: 01949069.7
(22) Date of filing: 26.01.2001
(51) Int. Cl.: H02J 13/00

(54) **SYSTEM WITH WEB/WAP-INTERFACE, FOR SUPERVISION OF ELECTRICAL POWER GENERATION**
SYSTEM MIT WEB-/WAP-SCHNITTSTELLE ZUR ÜBERWACHUNG DER ERZEUGUNG ELEKTRISCHER ENERGIE
SYSTEME A INTERFACE WEB/WAP PERMETTANT DE SUPERVISER LA GENERATION D'ELECTRICITE

(30) Priority: 01.02.2000 NO 20000522
(43) Date of publication of application: 02.01.2003
(73) Proprietor: ABB Technology AG, 8050 Zurich (CH)
(72) Inventor: GJERDE, Jan, Ove, N-0375 Oslo (NO); GUNDERSEN, Lars, S., N-0565 Oslo (NO); HELLUM, Morten, N-0377 Oslo (NO)
(74) Representative: Dahlstrand, Björn
(86) International application number: PCT/IB2001/000096
(87) International publication number: WO 2001/057985

(56) References cited:
- EP-A2- 0 853 368
- DE-A1- 19 651 270
- HOVLAND F. ET AL.: 'New software platform for energy management', XP010351398 Telecommunication energy conference 1999, the 21st international. 6-9 june 1999. ISBN: 0-7803-5624-1
- LILJA T.: 'Mobile energy supervision', XP001056989 Telecommunications energy conference 2000. The 22th international. 10-14 sept. 2000, ISBN: 0-7803-6407-4
- SARKINEN J. ET AL.: 'Integrate internet solutions into your energy management network', XP000896365 Telecommunications energy conference 1998, the 20th international. 4-8 oct. 1998, ISBN: 0-7803-5069-3
- SJOBERG S. ET AL.: 'Implementing a nationwide energy', XP001056991 Telecommunications energy conference 2000, the 22th international. 10-14 sept. 2000, ISBN: 0-7803-6407-4
- ERICSSON COMPONENTS AB DIRECTION FOR USE AC-SUPERVISION WITH BMP 604 012/1. 1553-BMP 604 012/1 UEN REV C 26 November 1999, XP002906228

## Description

### TECHNICAL FIELD.

The present invention relates to supervision and control of an electrical power generation, transmission and distribution network. In particular the present invention discloses a method, a system and a computer program product for controlling electrical distribution equipment connected to a medium voltage distribution network.

### BACKGROUND ART.

Electrical power generation, transmission and distribution relies on a number of distribution networks to transmit power to a series of end users. One such type of network is a part of a medium voltage distribution network between a substation and one or more end customers, a network type referred to as a Feeder network.

It is known to monitor characteristics of electrical power such as voltage and reactive power of the power supply delivered to end users in certain sections of a generation, transmission and distribution network. It is also known to control certain electrical power characteristics so as to provide a power supply that conforms to a given specification. In some networks a type of controller device known as a Remote Terminal Unit is commonly used both to gather sensor data and to generate control signals that activate control functions and open or close switches and such like for transmission and distribution networks. Large and complex Supervisory Control and Data Acquisition (SCADA) systems have been developed for the purpose of automating systems including feeder networks, that is, automating control over feeders. Such systems are typically not standardised but are often purpose built and usually include many proprietary devices and/or sub-systems, software and communication protocols.

A description of a device for automation of feeder systems is given in US 5,237,511. It describes a method and apparatus for providing a smart Remote Terminal Unit (RTU) for use in a distribution automation system in which a RTU may be located in a very remote location. US 5,475,867 describes a Distributed SCADA system, in which a number of RTUs in the form of supplemental RTUs are linked together in a distributed system. The system is also provided with a radio communication means for communication between the RTUs and a control system.

A remote control system in which a first computer may control a second, possibly remote, computer over the Internet using a standard web-browser is described in US 5,801,689. An integrated control system with one or more programmable controllers for operating and monitoring industrial processes and equipment is described in US 5, 805, 442. The system includes controllers that send data to a control system in a format suitable for use with, for example, web-browser programs. The method describes how signals from an industrial controller may be formatted into a web browser format such as HTML by which means data gathered by the controllers may be displayed on a remote computer.

A description of an electric power system protection and control system including a plurality of protection controllers is given in EP0853368. A display controller is connected to each of the protection controllers via a communication network, for displaying and controlling an operation and status of each of the protection controllers for monitoring.

An arrangement including a server which is arranged to send and receive data to and from a connected browser is given in DE19651270. A supervision module is provided, and preferably arranged to store and to update a list of the respectively active necessary programs, continuously.

A news bulletin dated May 19, 1998 on a web site connected with a company called Nacimiento Software Corporation describes a product called AppletVIEW Toolkit (Trade Mark). The product is a developers kit for software applications based on Java (Trade Mark). It is described that in a university laboratory with the AppletVIEW Toolkit the students can use standard web browsers to log onto a laboratory web page, start and stop the motors in the lab, control the speeds and RPM of the motors, while observing the voltage trends on AppletVIEW Toolkit's real-time charts.

### SUMMARY OF THE INVENTION

It is an object of the invention to provide a means to supervise and control a system from a second computer system.

It is also an object of the invention to provide a means to supervise and control a controller means in an electrical power system from a second computer system.
It is another object of the invention to provide a means to control electrical characteristics of an electrical power network from a second computer system.
It is further object of the invention to provide a simple and open-standard computer program means to monitor characteristics of electrical power.
It is another object of the invention to provide a system to supervise and control a system such as medium voltage electrical power distribution feeder system.
It is a yet further object of the invention to provide a computer program product to monitor and control an electrical power generation, transmission and distribution system.
It is another object of the invention to provide a presentation of information which may be used in a method to monitor and control an electrical power system.

The invention is defined by the features of independent claims. Preferred embodiments is defined in the dependent claims.

In one embodiment of the invention the computer program product is also summarily described here as comprising an HTTP server included in a controller means, sending data according to http protocol over a TCP/IP connection. The data is included in a html document, that may also include a URL link to an applet. The controller means is located in the electric power network. The http server is communicating with a client on a second computer using web technology such as TCP/IP, http and HTML. The Applet is distributed to an HTTP server included in a controller means of a feeder distribution system, such as, for example, a Remote Terminal Unit (RTU). Measured values for characteristics such as voltage, and detected states for switchable functions such as a load break switch or a breaker, are received by the http server from other functions of the controller means. The server sends data and a link to the applet to a second computer system, which may for example be remote. The data and link are sent in the form of file according to a known Hypertext Markup Language (HTML) standard. The Applet can reside in the same web server as the HTML document, or on another server indicated with an Uniform Resource Locator (URL) link included in the HTML document. A copy of the Applet is transferred to the second computer. At the second computer system, an operator, or an other computer program, may inspect a characteristic and/or switchable function displayed by the Applet in a graphical user interface (GUI) display and, as necessary, change the display of the Applet. Changing the Applet display results in an output from the Applet in the form of a control signal, hereafter described as a process distant control signal, which further results in generation of a control signal from the controller means, hereafter described as a process near control signal, to control equipment connected to the feeder system in order to control a function related to the characteristic or switchable function displayed by the applet. Alternatively or as well the output from the Applet may be inspected by a second computer program at the second computer system. By means of the invention a characteristic of the electrical power supply including a state of a switchable function may be supervised and controlled from a second computer system.

The main advantage of the invention is that an electrical power system may be automated for supervision and control purposes and linked to a second computer or central control system using open-standard web-browser technology. This web browser technology is not dependent on any one computer type and is therefore platform-independent giving the additional advantage that it may be used in a system with equipment that includes different computer platforms. This technology is inexpensive to purchase, easily installed, easily interchanged, and permits the economic automation of, for example, medium voltage networks including smaller or isolated feeder systems and similar installations.

Another advantage is that a part of a system such as a Feeder system thus automated is easily integrated into existing systems. A further advantage is that existing systems and feeder distribution systems may be simply and economically retrofitted with equipment and computer program products according to the invention.

### BRIEF DESCRIPTION OF THE DRAWINGS

The present invention will be described in more detail in connection with the enclosed schematic drawings.
Figure 1 shows a simplified diagram of different levels of a power generation, transmission and distribution network including a feeder network.
Figure 2 shows a block diagram for a schematic representation of an architecture for a Remote Terminal Unit according to an embodiment of the invention.
Figure 3 shows a flow chart for a computer program product according to an embodiment of the invention.
Figure 4 shows a diagram of a computer screen display of a presentation of information provided by a computer program product according to the invention.
Figure 5 shows a block diagram for a schematic representation of an architecture for a Remote Terminal Unit according to another embodiment of the invention.

### DESCRIPTION OF THE PREFERRED EMBODIMENTS

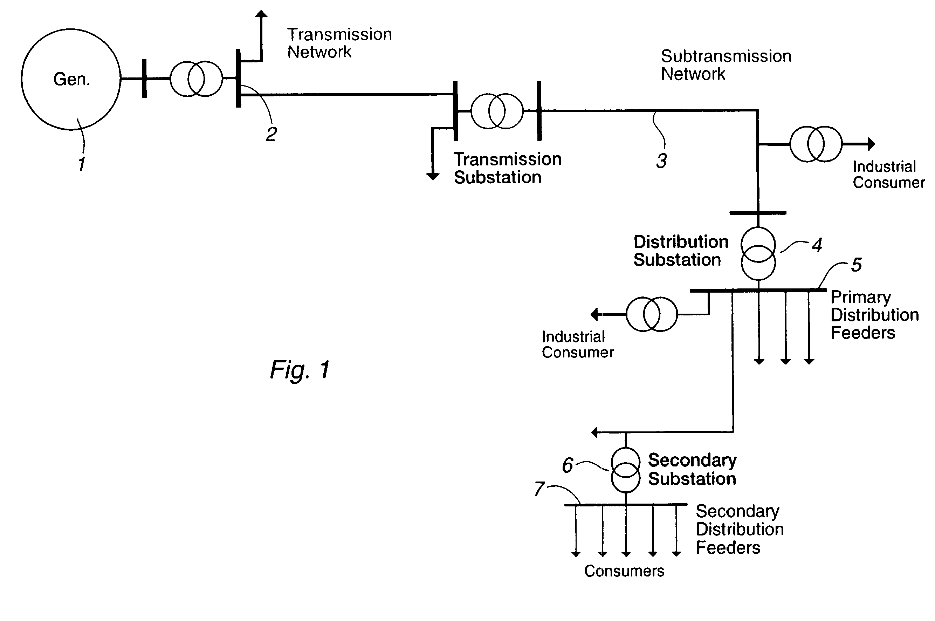

Figure 1 shows a network with a Generating station 1, a Transmission Network 2, a Sub-transmission Network 3, a Distribution Substation 4, Primary Feeders 5, a Secondary Substation 6 and Secondary Feeders 7.

The sketch shows schematically a medium voltage distribution network in the network from the Distribution Substation 4 down to the Secondary substation. A Remote Terminal Unit (RTU) is commonly located in generating stations and transmission substations.

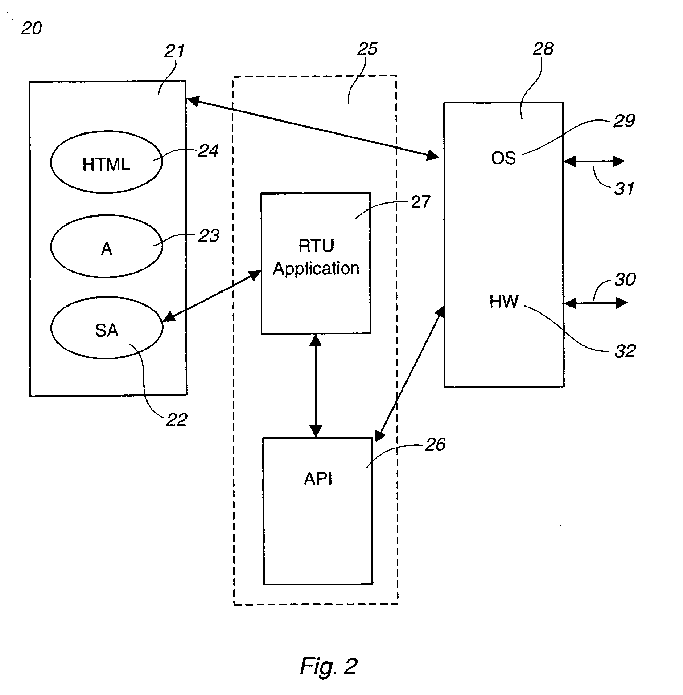

Figure 2 shows an architecture for a Remote Terminal Unit (RTU) 20. This includes a RTU software 25, a Hypertext Transfer Protocol (HTTP) server 21 and a RTU hardware 28. The HTTP server 21 includes a server application SA 22, an applet, A, 23 and HTML code 24. The RTU software 25 includes an Application Programming Interface (API) 26 constituting the interface between the RTU application 27 and the process interface 30, an RTU Application 27 and an operating system 29. The RTU hardware 28 includes at least one communications interface 31 and at least one process interface for data acquisition and control 30. The communications interface 31 uses a standard communications protocol, preferably hypertext transfer protocol (http) on top of Transmission Control Protocol/Internet Protocol (TCP/IP) and/or Ethernet. Communication links are shown in Figure 2 as arrows between blocks such as that between Server Application 22 through RTU Application 27 to and Data Acquisition API 26.

Sensor information from the feeder system is available via an interface such as process interface 30. The acquired data received via process interface 30 from sensor means associated with a controller means such as an RTU is made available to the RTU Application 27 through a known type of computer programming function called an API 26. By this means, sensor data from the Feeder system may be acquired by any software or control application running in the RTU which is capable of interacting with a known or standard API. RTU Application 27 is a control application running in a controller means that is capable of generating signals to control equipment such as switches, breakers, transformer tap changers and such like in the Feeder system. The acquired data is also made available to the Server Application 22 via the API 26 as well as the RTU Application. A part of the acquired data may also be processed in the RTU application or some other function of the controller means to calculate one or more parameters or characteristics based in part on the acquired data. The controller means is arranged with calculation means to calculate one or parameters based at least in part on the acquired data. Data calculated dependent on the acquired data may also be made available to the Server Application 22.

In order to supervise or control a system including a controller means such as an RTU according to the invention, the HTTP server 21 of RTU 20 is accessed by a second computer, which is typically part of a central control system, and the HTTP server 21 makes an HTML document available to the second computer. The HTML document contains an active link, such as a URL, to the Applet A, 23. Applet 23 provides a Graphic User Interface (GUI) display on the computer screen of the second computer, displaying a representation of the supervised or controlled unit, displaying values of characteristics such as voltage, current, temperature, and states of functions such as position of switches, breakers, tap changers and other relevant information from the RTU. This representation may be inspected by a human operator. As necessary, the GUI representation may be manipulated by the operator.

The GUI display provided on the second or central computer system by the Applet 23 may be manipulated and changes made to the GUI display. Clicking on a switchable function such as a representation of a given switch, for example, results in a signal being sent via the Server Application 22 of the HTTP server 21 of the controller means. The Server Application 22 accepts the signal and produces in turn a signal which is sent to the RTU Application 27. The RTU Application then generates a control signal. The control signal is sent from the application 27 via the API 26 to the process interface 30, thus opening or closing the given switch in the Feeder system according to the signal sent by the Applet 23. Similarly, a representation of a slider, dial, graph or other readout representation may be manipulated on the GUI display provided by Applet 23 to adjust the value of a voltage or load or other relevant characteristic. In a similar way, a figure may be input to an input field on the GUI display via a keyboard, or selected using a mouse click. In each case of manipulation of the GUI display the Applet 23 sends a signal as described above with the result that the Application 27 of the RTU generates a signal to cause an adjustment to the value of the characteristic in the degree indicated by the adjustment of the representation in the Applet.

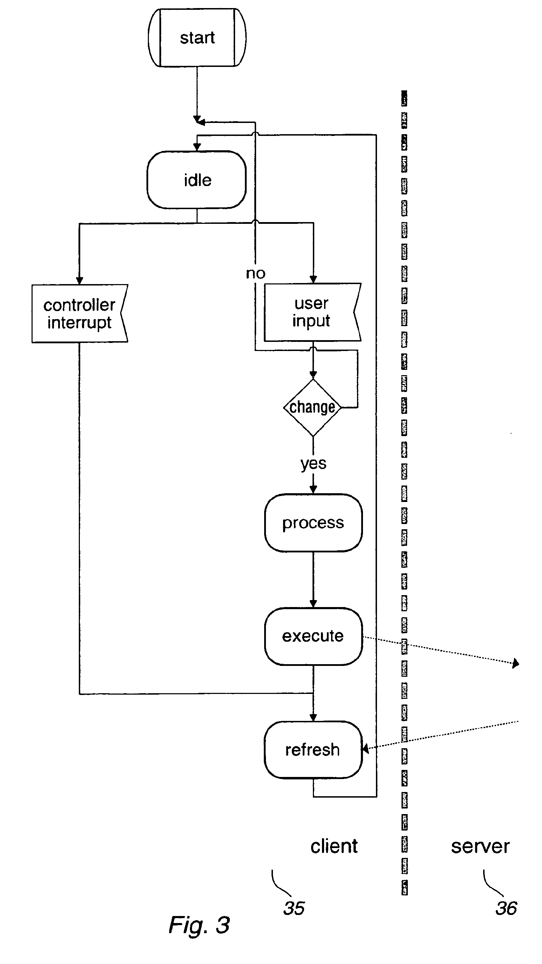

Figure 3 shows a flow chart with a client 35 and a server 36. The block diagram shows steps for monitoring and/or executing an instruction (step labelled execute) for a given characteristic represented on the GUI display by the Applet 23. The client 35 is an executing example of the Applet 23. The server 36 is a server process, which should not be confused with a server machine or the HTTP server, and would be running on the equipment in the substation, for example, in the controller means such as a RTU. The block sequence for the client 35 includes a step labelled change which checks for a change in status of the characteristic in question.

It can be seen from Figure 3 that the detailed operation of the example of Applet 23 shown includes a user input stage and a change step. If the user input represents a change with respect to the current status, a command is sent to the server, either as a Remote Method Invocation (RMI), a Remote Procedure Call (RPC), or other means of executing a remote command. The internal status of the Applet is then refreshed.

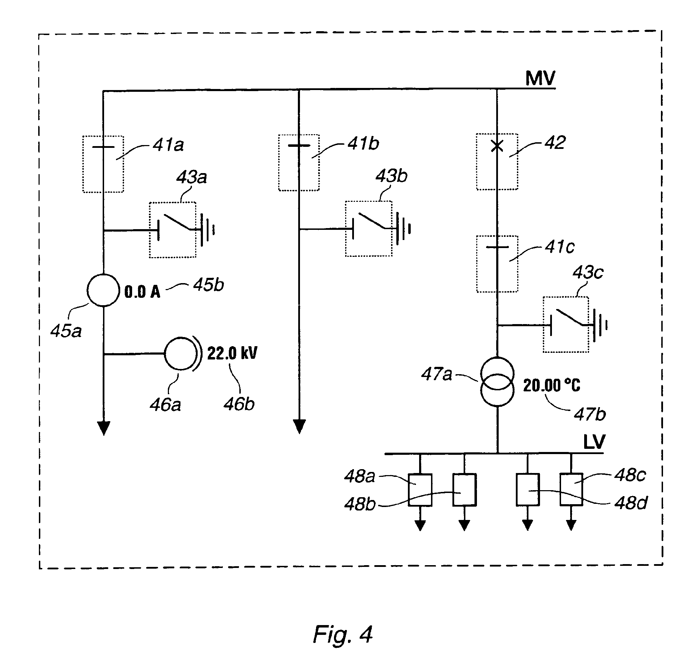

Figure 4 shows an example of a representation of a screen display provided by the Applet 23 according to a preferred embodiment of the invention. It includes a medium voltage, MV, and low voltage, LV, distribution section. A network is shown which includes three load break switches 41a,b,c and one circuit breaker 42. It also includes a current measuring device 45a and a voltage measuring device 46a. A transformer 47a is shown in a medium voltage section and four fused feeders 48a,b,c,d are shown in a low voltage section of the network. The display includes a representation of a current measurement 45b and a voltage measurement 46b. A measurement of temperature 47b shows a reading of a temperature inside transformer 47a.

The dotted rectangles surrounding 41a,b,c, 42, and 43a,b,c, are intended to convey that those elements incorporate a clickable button in the screen display. Thus clicking on load break switch 41a would have the end result of a control signal being output by the RTU to close (or open) the load break switch. Clicking on the relevant elements on the Applet display may similarly control circuit breaker 42. Clicking on an earth switch 43a would result in an information window appearing. An operator may optionally type in commands instead of manipulating a GUI display in a case where that may be advantageous, such as using a second computer system or computing device with limited graphic capabilities.

The information about a characteristic of the system such as temperature 47b in transformer 47a allows an operator to judge if a temperature of the oil coolant in the transformer, for example, shows that the load on the transformer may or may not be increased. Likewise the displayed electrical characteristics such as voltage 45b and current 46b indicate the state of that part of the network. Fused feeders 48a,b,c,d, indicate whether the fuses into the consumer lines are intact or have blown.

The preferred embodiment of the invention thus described may also or in addition be used to send a process distant control signal to the controller means which is not dependent on, or derived from the acquired data.

The Applet 23 and the Server Application 22 are preferably written in an object oriented (OO) language that is substantially capable of running on almost any kind of computer. The widely used language from Sun Microsystems known as Java and its derivatives may be suitably used, as well as other OO languages including Smalltalk. A known proprietary and well recognised programming language such as Microsoft Corporations Active X controls may also be suitably used as a programming language.

Any web browser may be used on the second computer to display the Applet 23 including, for the sake of example, Netscape Corporation products such as Navigator or Communicator (Trade Marks).

In the preferred embodiment the HTTP server is embedded in the controller means, and is thus provided by a software function such as a computer program or other software means in the controller means.

In another embodiment the HTTP server 21 may be run as a software function on another hardware, separate from but associated with the controller means, such as a stand-alone computer or micro processor. Dependent on space and service requirements, the HTTP server functionality may also be carried out by software in an integrated circuit mounted on a printed circuit board or incorporated in a chip.

A RTU according to the preferred embodiment may be located in any suitable way, such as in a substation, at a MV switchboard including a Ring Main Unit (RMU), mounted on a pole, a pad or similar installation concerned with a feeder network.

In another embodiment of the invention the controller means in a section of an electrical transmission and distribution network may be any controller means including a PC, or a Programmable Logic Controller (PLC), or a Remote Terminal Unit (RTU) or an embedded controller.

In yet another embodiment of the invention, the second computer is a portable computer equipped with communication means to access the HTTP server 21. Such means may include a modem for telephone access to a private network or even a public network including the Internet. Such communication means may alternatively be a radio link to a network from which HTTP server 21 can be accessed. Such communication means between the portable computer and the network may even include an infra red link. A wireless means such as a Bluetooth (Trade Mark) device may be used to enable communication via a telephone or modem to a private telephone network, a publicly accessible cellular telephone network or an ordinary Public Switched Telephone Network (PSTN). An operator remote from a distribution equipment site, or nearby on the site can supervise and control at least one function of a system directly using a portable computer to contact the HTTP server 21 and other means according to the present invention.

In another further embodiment of the invention the function of the second computer may be carried out by a portable wireless communication device capable of receiving and sending an HTML document or another signal based on data conversion from or to a HTML based standard. Thus information from the controller means may be examined, and selections from a menu or other display means made and input. The selections are then transmitted back to the controller means using a Wireless Application Protocol (WAP) telephone or similar protocol capable of displaying data on the portable wireless communication device and accepting input related to the display.

In another, further and advantageous embodiment of the invention the data sent from the HTTP server is inspected by a second computer program running, for example, at least in part on the second computer, instead of a human operator. In this case, a Graphic User Interface is not required. The second computer program receives the data as is, i.e. for example an HTML document, sent according to the http protocol via a TCP/IP transport protocol. The values and switch positions normally displayed may for example be listed in a file. The computer program inspecting the information from the HTTP server evaluates the information and manipulates the switchable functions by means of a predetermined set of rules.

In a development of the further and advantageous embodiment of the invention, the second computer program may inspect what a human operator has indicated in the GUI screen display and then perform an evaluation, and may generate a process distant control signal. For example, to carry out a correction of power factor. A target power factor is input by a human operator, the second computer program inspects that input, the second computer program also receives the present power factor status from the controller means, and then second computer calculates, by means of the second computer program, actions to achieve the target power factor.

The computer program products according to the invention may be stored at least in part in different mediums that are computer readable. Archive copies may be stored on standard magnetic disks, hard drives, CD or DVD disks, or magnetic tape. The databases and libraries are stored preferably on data servers, but the computer program products may, for example at different times, be stored in any of; a volatile Random Access memory (RAM) of a computer or processor, a hard drive, an optical or magneto-optical drive, or in a type of non-volatile memory such as a ROM, PROM, or EPROM device. The computer program product may also be arranged in part as a distributed application capable of running on several different computers or computer systems at more or less the same time.

In another embodiment of the invention, communication means to access HTTP server 21 may alternatively be a wireless means such as a radio link. A wireless means such as a Bluetooth (Trade Mark) device may be used to enable communication between the second computer and the HTTP server 21 via a network or a telephone network. means for such communication may include a modem for telephone access to a private network or even a public network including the Internet. An operator remote from a distribution equipment site, or nearby on the site can supervise and control at least one function of a system directly using a portable computer to contact the HTTP server 21 and other means according to the present invention.

In yet another embodiment of the invention the HTML document made available to the second computer conforms to another standard based on SGML (Standard Generalised Markup Language) called XML, extensible Markup Language.

Figure 5 shows the other embodiment shown in Figure 2 but with an XML document and XML code indicated in block 24'. The XML document provides for active links, as does the HTML document as shown 24 in Figure 2, which contains an active link, such as a URL, to the Applet A, 23. And like the HTML document, the XML document may contain instructions providing a means to generate a graphical representation of the data contained. However the XML document may also merely be a representation of the data. In order for the second computer system to generate a graphical representation, a second XML document following the Extensible Style Language (XSL) standard is made available from the HTTP server or from a third computer system. The XML document may also provide a means to call a method and pass parameters to that method, for example, to make a Remote Method Invocation (RMI), a Remote Procedure Call (RPC), or other means of executing a remote command.

The advantage of this embodiment is that it provides for a more efficient communication, especially when it comes to application-to-application interaction, as opposed to human-machine interaction, and that executable functions for a wider range control or monitoring operations may be included in the page readable by a web browser program running on the remote computer. This in turn enables more options for monitoring, controlling and regulating devices in an electrical power generation, transmission and distribution network.

## Claims

1. A method to supervise and control a system for electrical generation, transmission and distribution including data acquisition means (30) and a controller means (20,28), in which acquired data for at least one characteristic of the system is examined and a process near control signal is generated by the controller means(20,28), in which method said acquired data is incorporated into an HTML document (24) and made available to a second computer system in said controller means and a process distant control signal dependent in part on said acquired data incorporated in said HTML document (24) is generated from said second computer system, **characterised by** the steps of,
- inspecting with a second computer program the data sent to a HTTP server (21) of the controller means,
- evaluating with the second computer program an input by an operator comprised in the data sent to the HTTP server of the controller means,
- generating with said controller means said process near control signal.

2. A method according to claim 1, **characterised by**:
- evaluating a value input by the operator,
- calculating one or more actions required to achieve a characteristic of the system dependent on the value input by the operator.

3. A method according to any of claims 1 or 2,
**characterised by** incorporating calculated data based on the said acquired data in the HTML document (24) made available to the second computer system.

4. A method according to any of claims 1-4,
**characterised in that** the HTML document (24) contains a GUI (Fig.4) depending on said acquired data made available to the second computer system and the method contains the further steps of
- manipulating the representation (41a, 41b, 41c, 42, 43a, 43b, 43c) for said at least one characteristic (41-48) by means of the GUI display.
- generating a process distant control signal dependent on the manipulation of the GUI on the second computer system.

5. A method according to any of claims 1-4,
**characterised in that** the HTML document (24) contains means to execute an Applet (23) such as an Applet included in the HTML document or a link to the Applet made available to the client (35), and the method contains the further steps of
- displaying by means of the Applet a representation depending on said acquired data in a GUI display (Fig.4) at the second computer system
- manipulating the representation (41a, 41b, 41c, 42, 43a, 43b, 43c) for said at least one characteristic (41-48) by means of the GUI display.
- generating a process distant control signal dependent on the manipulation of the GUI executed by means of the Applet.

6. A method according to any of claims 1-5 ,
**characterised in that**
the HTML document (24)comprises a Uniform Resource Locator (URL) link to an address from which an instance of the Applet (23) may be copied to run on the second computer system.

7. A method according to claim 1, **characterised in that** the said process near control signal is dependent on the process distant control signal sent by the second computer system to an Application (27) of said controller means of the system via an HTTP server (21).

8. A method according to claim 6, **characterised in that** the process distant control signal sent by the Applet (23) via the HTTP server (21) is passed to the Application (27) of said controller means.

9. A method according to any of claims 1-8 **characterised in that** the process distant control signal is generated by the second computer program running on the second computer and is dependent at least in part on manipulation of the GUI display (Fig.4) together with an acquired data from the controller means.

10. A method according to any of claims 1-9 **characterised in that** the second computer program running on the second computer carries out the additional steps of
- inspecting the manipulation of the GUI (Fig.4) by an operator,
- performing an evaluation according to pre-determined rules.

11. A method according to any of claims 1-10,
**characterised by**
- evaluating the information comprised in the data sent to the HTTP server (21) of the controller means,
- manipulating a switchable function according to a predetermined set of rules.

12. A method according to any of claims 1-11,
**characterised in that** TCP/IP protocol is used to transmit said acquired data between the HTTP server (21) and the second computer system.

13. A method according to claim 12, **characterised in that** http protocol is used on top of TCP/IP protocol to transmit said acquired data between the HTTP server (21) and the second computer system.

14. A method according to claim 1, **characterised in that** the system is an electrical power distribution network (1-7) including a Feeder system (5,6,7) and said controller means.

15. A method according to claim 1, **characterised in that** the system is a Feeder system (5,6,7) of a medium voltage electrical power distribution network.

16. A method according to claim 1, **characterised in that** said acquired data made available to said second computer system is communicated from the HTTP server (21) in said controller means by a wireless means.

17. A method according to claim 1, **characterised in that** said process distant signal is communicated from the said second computer system to the HTTP server (21) in said controller means by a wireless means.

18. A method according to claim 17, **characterised in that** said wireless means includes a device compatible with the Bluetooth standards.

19. A method according to any of claims 1-17,
**characterised in that** the second computer system is a portable computer equipped with communication means.

20. A method according to claim 19, **characterised in that** the communication means enable a wireless link between the portable computer and a Public Switched Telephone Network (PSTN), cellular network or satellite based telephone network.

21. A method according to claim 19, **characterised in that** the second computer system is arranged in the form of a portable telephone equipped with wireless communication means.

22. A method according to claim 21, **characterised in that** the portable telephone is a suitably equipped Wireless Application Protocol (WAP) or similar protocol telephone for displaying data and accepting input related to the display.

23. A method according to any of claims 1-22,
**characterised by** the step of
- incorporating data based on the said acquired data in an XML document.

24. A system for supervise and control a system for electrical generation, transmission and distribution including data acquisition means (30) and a controller means (20,28), comprising means providing the following function: acquired data for at least one characteristic of the system is examined and a process near control signal is generated by the controller means (20,28), said acquired data is incorporated into an HTML document (24) and made available to a second computer system in said controller means and a process distant control signal dependent in part on said acquired data incorporated in said HTML document (24) is generated from said second computer system, **characterised by** means for,
- inspecting with a second computer program the data sent to a HTTP server (21) of the controller means,
- evaluating with the second computer program an input by an operator comprised in the data sent to the HTTP server of the controller means,
- generating with said controller means said process near control signal.

25. A system according to claim 24, **characterised in that**
- said computer program means further comprises
- a Data Acquisition API (26) and
- the HTML code means includes a Graphical User Interface for display (Fig.4), user inspection and manipulation on the second computer system.

26. A system according to claim 24, **characterised in that** the HTML code means is arranged together with an Applet (23) to provide a screen display on the second computer.

27. A system according to claim 24, **characterised in that** said system data is arranged transmittable using TCP/IP protocol.

28. A system according to claim 24, **characterised in that** said acquired data is arranged transmittable using http protocol on top of TCP/IP protocol.

29. A system according to claim 24, **characterised in that**
- the Applet (23) is arranged to send a process distant control signal depending on user manipulation of the Graphical User Interface (Fig.4),
- the said process near control signal is generated by said controller means (20, 28) dependent on the process distant control signal sent by the Applet.

30. A system according to claim 24, **characterised in that** the second computer comprises a portable telephone equipped with wireless communication means.

31. A system according to claim 30, **characterised in that** the portable telephone is a suitably equipped Wireless Application Protocol (WAP) or similar protocol telephone for displaying data and accepting input related to the display.

32. A system according to claim 24, **characterised in that** the controller means (20,28) is an electronic computing device or system of devices of an electrical distribution network (1-7).

33. A system according to claim 24, **characterised in that** the controller means is a Programmable Logic Controller (PLC) or a Remote Terminal Unit (RTU) (20).

34. A system according to claim 24, **characterised in that** the controller means is a Personal Computer (PC).

35. A system according to claim 24, **characterised in that** the controller means is an embedded controller.

36. A system according to claim 24, **characterised in that** the controller means comprises a wireless communication means.

37. A system according to claim 36, **characterised in that** the wireless communication means is compatible with Bluetooth standards.

38. A system according to claim 24, **characterised in that** the electrical distribution system is a Feeder system (5,6,7) of a medium voltage electrical power distribution network.

39. A system according to claim 24, **characterised in that** the acquired data and the calculated data are arranged transmittable in an XML document.

40. A method according to claims 1-23 **characterised by** using means of a human operator to supervise and control an electrical power system.

41. A method according to claims 1-23 **characterised by** using means of a human operator to supervise and control a feeder (5,6,7) in an electrical power distribution network.

42. A method according to claims 1-23 **characterised by** sending a process distant signal to the controller means which process distant signal is independent of acquired data.

43. A method according to claims 1-23 **characterised by** using means of a second computer program running at least in part on the second computer system.

44. A computer program product for supervision and control of an electrical power generation, transmission and distribution system, comprising computer program means, computer program code and software means, which said computer program product when run on a computer or processor will make the computer or processor carry out a method according to any of claims 1-22.

45. A system according to claim 24 comprising a graphical user interface (Fig.4) for presentation and manipulation of information on a computer screen data acquired from a system for supervision and control of electrical generation, transmission and distribution equipment, comprising data acquisition means (30), computing means, computer program means and controller means (20,28), said acquire data comprising a characteristic (41-48) of the electrical power system including a representation (41-43) of a state of a switchable function which may be supervised and evaluated and may be controlled using a GUI means (23) from a second computer system.

46. A computer program product according to claim 44 included on a computer readable medium.

47. A method according to claim 1-23 **characterised by** generating a data communication signal incorporated in an HTML document (24) format for presenting and manipulating data from an electrical power generation, transmission and distribution system acquired by a controller means.

48. A method according to claim 47 **characterised in that** the data communication signal comprises a document in XML format.

49. A method according to claim 47 **characterised in that** the data communication signal comprises a process distant signal for communicating a control action between a second computer and a controller means.

50. A method according to claim 47 **characterised in that** the data communication signal comprises a process near signal generated by a controller means for carrying out a control action.

## Patentansprüche

1. Verfahren zum Überwachen und Steuern eines Systems für elektrische Erzeugung, Übertragung und Verteilung, aufweisend Datenbeschaffungsmittel (30) und ein Steuermittel (20, 28), wobei
beschaffte Daten für mindestens ein Merkmal des Systems untersucht werden und
ein Verfahrens-Nahsteuer-Signal durch das Steuermittel (20, 28) erzeugt wird, wobei in dem Verfahren die beschafften Daten in ein HTML-Dokument (24) eingegliedert werden und einem zweiten Computersystem in dem Steuermittel zur Verfügung gestellt werden und
ein Verfahrens-Fernsteuer-Signal vom zweiten Computersystem erzeugt wird, das teilweise von den beschafften Daten abhängt, die in das HTML-Dokument (24) eingebunden sind,
**gekennzeichnet durch** folgende Schritte:
- Prüfen der zu einem http-Server (21) des Steuermittels gesendeten Daten mit einem zweiten Computerprogramm,
- Auswerten einer Eingabe von einem Benutzer, die in den Daten enthalten ist, die zum http-Server des Steuermittels gesendet wurden, mit dem zweiten Computerprogramm,;
- Erzeugen des Verfahrens-Nahsteuer-Signals mit dem Steuermittel.

2. Verfahren gemäß Anspruch 1, **gekennzeichnet durch**:
- Auswerten eines vom Benutzer eingegebenen Wertes,
- Berechnen einer oder mehrerer Aktionen, die benötigt werden, um ein Merkmal des Systems zu erhalten, abhängig von dem vom Benutzer eingegebenen Wert.

3. Verfahren gemäß irgendeinem der Ansprüche 1 oder 2, **gekennzeichnet durch** Eingliedern von berechneten Daten, die auf den beschafften Daten in dem HTML-Dokument (24) basieren, das dem zweiten Computersystem zur Verfügung gestellt wird.

4. Verfahren gemäß irgendeinem der Ansprüche 1 bis 3, **dadurch gekennzeichnet, dass** das HTML-Dokument (24) ein GUI (Fig. 4) enthält, das von den beschafften Daten abhängt, die dem zweiten Computersystem zur Verfügung gestellt werden und wobei das Verfahren weiter folgende Schritte aufweist:
- Manipulieren der Darstellung (41a, 41b, 41c, 42, 43a, 43b, 43c) für das mindestens eine Merkmal (41 - 48) durch Mittel der GUI-Anzeige,
- Erzeugen eines Verfahrens-Fernsteuer-Signals, das von der Manipulation des GUI auf dem zweiten Computersystem abhängt.

5. Verfahren gemäß irgendeinem der Ansprüche 1 bis 4, **dadurch gekennzeichnet, dass** das HTML-Dokument (24) Mittel zur Ausführung eines Applets (23) beinhaltet, wie z.B. ein Applet, das in dem HTML-Dokument eingegliedert ist, oder einen Link zum Applet, der dem Client (35) zur Verfügung gestellt wird, und wobei das Verfahren weiter folgende Schritte aufweist:
- Anzeigen einer Darstellung, die von den beschafften Daten abhängt in einer GUI-Anzeige (Fig. 4) am zweiten Computersystem mittels des Applets
- Manipulieren der Darstellung (41a, 41b, 41c, 42, 43a, 43b, 43c) für das mindestens eine Merkmal (41 - 48) mittels der GUI-Anzeige
- Erzeugen eines Verfahrens-Fernsteuer-Signals, das von der Manipuliation des GUI abhängt, ausgeführt mittels des Applets.

6. Verfahren gemäß irgendeinem der Ansprüche 1 bis 5, **dadurch gekennzeichnet, dass** das HTML-Dokument (24) einen Uniform-Resource-Locator-(URL)-Link zu einer Adresse umfasst, von der ein Instanz des Applets (23) kopiert werden kann, um auf dem zweiten Computersystem zu laufen.

7. Verfahren gemäß Anspruch 1, **dadurch gekennzeichnet, dass** das Verfahrens-Nahsteuer-Signal von dem Verfahrens-Fernsteuer-Signal abhängt, das von dem zweiten Computersystem an eine Anwendung (27) des Steuermittels des Systems über einen http-Server (21) geschickt wird.

8. Verfahren gemäß Anspruch 6, **dadurch gekennzeichnet, dass** das Verfahrens-Fernsteuer-Signal, das von dem Applet (23) über den http-Server (21) gesendet wird, zu der Anwendung (27) des Steuermittels weitergeleitet wird.

9. Verfahren gemäß irgendeinem der Ansprüche 1 bis 8, **dadurch gekennzeichnet, dass** das Verfahrens-Fernsteuer-Signal durch das zweite Computerprogramm erzeugt wird, das auf dem zweiten Computer läuft, und mindestens teilweise von der Manipuliation der GUI-Anzeige (Fig. 4) zusammen mit beschafften Daten von dem Steuermittel abhängt.

10. Verfahren gemäß irgendeinem der Ansprüche 1 bis 9, **dadurch gekennzeichnet, dass** das zweite Computerprogramm, das auf dem zweiten Computer läuft, die zusätzlichen Schritte ausführt:
- Manipuliation der Verarbeitung des GUI (Fig. 4) durch einen Benutzer
- Durchführen einer Auswertung gemäß vorher festgelegten Regeln.

11. Verfahren gemäß irgendeinem der Ansprüche 1 bis 10, **gekennzeichnet durch**:
- Auswerten der Informationen, die in den Daten enthalten sind, die zum http-Server (21) des Steuermittels gesendet werden,
- Manipuliieren einer schaltbaren Funktion gemäß einem vorher festgelegten Satz von Regeln.

12. Verfahren gemäß irgendeinem der Ansprüche 1 bis 11, **dadurch gekennzeichnet, dass** TCP/IP-Protokoll verwendet wird, um die beschafften Daten zwischen dem http-Server (21) und dem zweiten Computersystem zu übertragen.

13. Verfahren gemäß Anspruch 12, **dadurch gekennzeichnet, dass** http-Protokoll zusätzlich einem TCP/IP-Protokoll verwendet wird, um die beschafften Daten zwischen dem http-Server (21) und dem zweiten Computersystem zu übertragen.

14. Verfahren gemäß Anspruch 1, **dadurch gekennzeichnet, dass** das System ein Verteilungsnetzwerk (1 - 7) für elektrischen Strom ist, das ein Zuführungssystem (5, 6, 7) und das Steuermittel beinhaltet.

15. Verfahren gemäß Anspruch 1, **dadurch gekennzeichnet, dass** das System ein Zuführungssystem (5, 6, 7) eines Verteilungsnetzwerks für elektrischen Strom mittlerer Spannung ist.

16. Verfahren gemäß Anspruch 1, **dadurch gekennzeichnet, dass** die beschafften Daten, die dem zweiten Computersystem zur Verfügung gestellt werden, von dem http-Server (21) in dem Steuermittel durch ein drahtloses Mittel übermittelt werden.

17. Verfahren gemäß Anspruch 1, **dadurch gekennzeichnet, dass** das Verfahrens-Fernsteuer-Signal von dem zweiten Computersystem zu dem http-Server (21) in dem Steuermittel durch ein drahtloses Mittel übermittelt wird.

18. Verfahren gemäß Anspruch 17, **dadurch gekennzeichnet, dass** das drahtlose Mittel ein Gerät beinhaltet, das mit Bluetooth-Standarts kompatibel ist.

19. Verfahren gemäß irgendeinem der Ansprüche 1 bis 17, **dadurch gekennzeichnet, dass** das zweite Computersystem ein tragbarer Computer ist, der mit Kommunikationsmitteln ausgestattet ist.

20. Verfahren gemäß Anspruch 19, **dadurch gekennzeichnet, dass** die Kommunikationsmittel eine drahtlose Verbindung zwischen dem tragbaren Computer und einem öffentlichen Telefonnetz (PSTN), einem Mobilfunknetz oder einem satellitengestützten Telefonnetz ermöglichen.

21. Verfahren gemäß Anspruch 19, **dadurch gekennzeichnet, dass** das zweite Computersystem in der Form eines tragbaren Telefons eingerichtet ist, das mit drahtlosen Kommunikationsmitteln ausgestattet ist.

22. Verfahren gemäß Anspruch 21, **dadurch gekennzeichnet, dass** das tragbare Telefon ein geeignet ausgestattetes Wireless-Application-Protocol-(WAP)- oder ein ähnliches Protokoll-Telefon ist, für das Anzeigen von Daten und Annehmen von Eingaben, die mit der Anzeige zusammen hängen.

23. Verfahren gemäß irgendeinem der Ansprüche 1 bis 22, **gekennzeichnet durch** folgenden Schritt:
- Eingliedern von Daten in ein XML-Dokument aufgrund der beschafften Daten.

24. System zum Überwachen und Steuern eines Systems für elektrische Erzeugung, Übertragung und Verteilung aufweisend Datenbeschaffungsmittel (30) und einem Steuermittel (20, 28), umfassend
Mittel zum Bereitstellen der folgenden Funktion:
beschaffte Daten für mindestens ein Merkmal des Systems werden untersucht und ein Verfahrens-Nahsteuer-Signal wird erzeugt durch das Steuermittel (20, 28), wobei die beschafften Daten in ein HTML Dokument (24) eingegliedert werden und einem zweiten Computersystem in dem Steuermittel zur Verfügung gestellt werden und
ein Verfahrens-Fernsteuer-Signal wird vom zweiten Computersystem erzeugt, das teilweise von den beschafften Daten abhängt, die in das HTML Dokument (24) eingebunden sind,
**gekennzeichnet durch** Mittel zum
- Prüfen der zu einem http-Server (21) des Steuermittels gesendeten Daten mit einem zweiten Computerprogramm,
- Auswerten einer Eingabe von einem Benutzer, die in den Daten enthalten ist, die zum http-Server des Steuermittels gesendet wurden, mit dem zweiten Computerprogramm,
- Erzeugen des Verfahrens-Nahsteuer-Signals mit dem Steuermittel.

25. System gemäß Anspruch 24, **dadurch gekennzeichnet, dass**
das Computer-Programm-Mittel des Weiteren ein Datenbeschaffungs-API (26) umfasst und
das HTML-Code-Mittel eine graphische Benutzeroberfläche für die Anzeige (Fig. 4), Benutzerinspektion und Manipulation auf dem zweiten Computersystem beinhaltet.

26. System gemäß Anspruch 24, **dadurch gekennzeichnet, dass** das HTML-Code-Mittel zusammen mit einem Applet (23) eingerichtet ist, eine Bildschirmanzeige auf dem zweiten Computer bereitzustellen.

27. System gemäß Anspruch 24, **dadurch gekennzeichnet, dass** die Systemdaten übertragbar unter Verwendung eines TCP/IP-Protokolls eingerichtet sind.

28. System gemäß Anspruch 24, **dadurch gekennzeichnet, dass** die beschafften Daten übertragbar unter Verwendung eines http-Protokolls zusätzlich zu dem TCP/IP-Protokoll eingerichtet sind.

29. System gemäß Anspruch 24, **dadurch gekennzeichnet, dass**
- das Applet (23) eingerichtet ist, ein Verfahrens-Fernsteuer-Signal zu senden, das von einer Benutzermanipulation der graphischen Benutzeroberfläche (Fig.4) abhängt.
- das Verfahrens-Nahsteuer-Signal durch das Steuermittel (20, 28) erzeugt wird in Abhängigkeit des Verfahrens-Fernsteuer-Signals, das durch das Applet gesendet wird.

30. System gemäß Anspruch 24, **dadurch gekennzeichnet, dass** der zweite Computer ein tragbares Telefon umfasst, das mit drahtlosen Kommunikationsmitteln ausgestattet ist.

31. System gemäß Anspruch 30, **dadurch gekennzeichnet, dass** das tragbare Telefon ein geeignet ausgestattetes Wireless-Application-Protocol-(WAP)- oder ein ähnliches Protokoll-Telefon ist, für das Anzeigen von Daten und Annehmen von Eingaben, die mit der Anzeige zusammenhängen.

32. System gemäß Anspruch 24, **dadurch gekennzeichnet, dass** das Steuermittel (20, 28) ein elektronisches Computergerät oder ein System von Geräten eines elektrischen Verteilungsnetzwerks (1 - 7) ist.

33. System gemäß Anspruch 24, **dadurch gekennzeichnet, dass** das Steuermittel eine speicherprogrammierbare Steuerung (PLC) oder ein Remote Terminal Unit (RTU) (20) ist.

34. System gemäß Anspruch 24, **dadurch gekennzeichnet, dass** das Steuermittel ein Personal Computer (PC) ist.

35. System gemäß Anspruch 24, **dadurch gekennzeichnet, dass** das Steuermittel ein Embedded Controller ist.

36. System gemäß Anspruch 24, **dadurch gekennzeichnet, dass** das Steuermittel ein drahtloses Kommunikationsmittel umfasst.

37. System gemäß Anspruch 36, **dadurch gekennzeichnet, dass** das drahtlose Kommunikationsmittel mit Bluetooth-Standarts kompatibel ist.

38. System gemäß Anspruch 24, **dadurch gekennzeichnet, dass** elektrische Verteilungssystem ein Zuführungssystem (5, 6, 7) eines Verteilungsnetzwerks für elektrischen Strom von mittlerer Spannung ist.

39. System gemäß Anspruch 24, **dadurch gekennzeichnet, dass** die beschafften Daten und die berechneten Daten übertragbar in einem XML-Dokument eingerichtet sind.

40. Verfahren gemäß irgendeinem der Ansprüche 1 bis 23, **gekennzeichnet durch** die Verwendung des Mittels eines menschlichen Benutzers, um ein elektrisches Stromsystem zu überwachen und zu steuern.

41. Verfahren gemäß irgendeinem der Ansprüche 1 bis 23, **gekennzeichnet durch** die Verwendung des Mittels eines menschlichen Benutzers, um eine Zuführungseinrichtung (5, 6, 7) in einem Verteilungsnetzwerk für elektrischen Strom zu überwachen und zu steuern.

42. Verfahren gemäß irgendeinem der Ansprüche 1 bis 23, **gekennzeichnet durch** das Senden eines Verfahrens-Fern-Signals zum Steuermittel, wobei das Verfahrens-Fern-Signal unabhängig von den beschafften Daten ist.

43. Verfahren gemäß irgendeinem der Ansprüche 1 bis 23, **gekennzeichnet durch** die Verwendung des Mittels eines zweiten Computerprogramms, das mindestens teilweise auf dem zweiten Computersystem läuft.

44. Computer-Programm-Produkt zum Überwachen und Steuern eines elektrischen Stromerzeugungs- , Übertragungs- und Verteilungssystems umfassend:
Computerprogramm-Mittel, Computerprogramm-Code und Software-Mittel, wobei das Computer-Programm-Produkt, wenn es auf einem Computer oder einem Prozessor ausgeführt wird, den Computer oder Prozessor dazu veranlasst, ein Verfahren gemäß irgendeinem der Ansprüche 1 bis 22 auszuführen.

45. System gemäß Anspruch 24, umfassend:
eine graphische Benutzeroberfläche (Fig. 4) zur Präsentation und Manipulation von Informationen auf einem Computerbildschirm von beschafften Daten von einem System zur Betreuung und Steuerung von elektrischer Erzeugungs-, Übertragungs- und Verteilungs-Ausrüstung,
umfassend ein Datenbeschaffungsmittel (30), ein Computermittel, ein Computer-Programm-Mittel und ein Steuermittel (20, 28), wobei die beschafften Daten umfassen:
ein Merkmal (41 - 48) des elektrischen Stromsystems, das eine Darstellung (41 - 43) eines Zustandes einer schaltbaren Funktion beinhaltet, die von einem zweiten Computer betreut und ausgewertet und gesteuert werden kann unter Verwendung eines GUI-Mittels (23).

46. Computer-Programm-Produkt gemäß Anspruch 44, das auf einem computerlesbaren Medium beinhaltet ist.

47. Verfahren gemäß irgendeinem der Ansprüche 1 bis 23, **gekennzeichnet durch** das Erzeugen eines Datenübermittlungssignals, das in ein HTML-Dokument-(24)-Format eingegliedert ist zum Präsentieren und Verarbeiten von Daten eines elektrischen Stromerzeugungs-, Übertragungs- und Verteilungs-Systems, die **durch** ein Steuermittel beschafft wurden.

48. Verfahren gemäß Anspruch 47, **dadurch gekennzeichnet, dass** das Datenübermittlungssignal ein Dokument in XML-Format umfasst.

49. Verfahren gemäß Anspruch 47, **dadurch gekennzeichnet, dass** das Datenübermittlungssignal ein Verfahrens-Fern-Signal für die Übermittlung einer Steueraktion zwischen einem zweiten Computer und einem Steuermittel umfasst.

50. Verfahren gemäß Anspruch 47, **dadurch gekennzeichnet, dass** das Datenübermittlungssignal ein Verfahrens-Nah-Signal umfasst, das durch ein Steuermittel für die Ausführung einer Steueraktion erzeugt wird.

## Revendications

1. Procédé pour superviser et commander un système de production, de transport et de distribution d'électricité, comprenant un moyen d'acquisition de données (30) et un moyen de gestion (20, 28), dans lequel les données acquises pour au moins une caractéristique du système sont examinées et un signal de commande proche du processus est généré par le moyen de gestion (20, 28), procédé dans lequel lesdites données acquises sont incorporées dans un document HTML (24) et mises à la disposition d'un deuxième système informatique dans ledit moyen de gestion et un signal de commande distant du processus dépendant en partie desdites données acquises incorporées dans ledit document HTML (24) est généré à partir dudit deuxième système informatique, **caractérisé par** les étapes consistant à :
- inspecter avec un deuxième programme informatique les données envoyées vers un serveur HTTP (21) du moyen de gestion,
- évaluer avec le deuxième programme informatique une entrée effectuée par un opérateur comprise dans les données envoyées au serveur HTTP du moyen de gestion,
- générer avec ledit moyen de gestion ledit signal de commande proche du processus.

2. Procédé selon la revendication 1, **caractérisé par** les opérations consistant à :
- évaluer une valeur saisie par l'opérateur,
- calculer une ou plusieurs actions nécessaires pour réaliser une caractéristique du système dépendant de la valeur saisie par l'opérateur.

3. Procédé selon l'une quelconque des revendications 1 et 2, **caractérisé par** le fait d'incorporer des données calculées basées sur lesdites données acquises dans le document HTML (24) mis à la disposition du deuxième système informatique.

4. Procédé selon l'une quelconque des revendications 1 à 4, **caractérisé en ce que** le document HTML (24) contient une IUG (figure 4) dépendant desdites données acquises mises à la disposition du deuxième système informatique et le procédé contient les étapes supplémentaires consistant à :
- manipuler la représentation (41 a, 41 b, 41 c, 42, 43a, 43b, 43c) pour ladite au moins une caractéristique (41-48) au moyen de l'affichage d'IUG,
- générer un signal de commande distant du processus dépendant de la manipulation de l'IUG sur le deuxième système informatique.

5. Procédé selon l'une quelconque des revendications 1 à 4, **caractérisé en ce que** le document HTML (24) contient un moyen permettant d'exécuter une appliquette (23) telle qu'une appliquette incluse dans le document HTML ou un lien vers l'appliquette mis à la disposition du client (35), et le procédé contient les étapes supplémentaires consistant à :
- afficher au moyen de l'appliquette une représentation dépendant desdites données acquises sur un affichage IUG (figure 4) dans le deuxième système informatique ;
- manipuler la représentation (41a, 41b, 41c, 42, 43a, 43b, 43c) pour ladite au moins une caractéristique (41-48) au moyen de l'affichage IUG ;
- générer un signal de commande distant du processus dépendant de la manipulation de l'IUG exécutée au moyen de l'appliquette.

6. Procédé selon l'une quelconque des revendications 1 à 5, **caractérisé en ce que** le document HTML (24) comprend un lien URL vers une adresse à partir de laquelle une instance de l'appliquette (23) peut être copiée pour être exécutée dans le deuxième système informatique.

7. Procédé selon la revendication 1, **caractérisé en ce que** ledit signal de commande proche du processus dépend du signal de commande distant du processus envoyé par le deuxième système informatique à une application (27) dudit moyen de gestion du système via un serveur HTTP (21).

8. Procédé selon la revendication 6, **caractérisé en ce que** le signal de commande distant du processus envoyé par l'appliquette (23) via le serveur HTTP (21) est transmis à l'application (27) dudit moyen de gestion.

9. Procédé selon l'une quelconque des revendications 1 à 8, **caractérisé en ce que** le signal de commande distant du processus est généré par le deuxième programme informatique exécuté sur le deuxième ordinateur et dépend au moins en partie de la manipulation de l'affichage IUG (figure 4) ainsi que de données acquises à partir du moyen de gestion.

10. Procédé selon l'une quelconque des revendications 1 à 9, **caractérisé en ce que** le deuxième programme informatique exécuté sur le deuxième ordinateur exécute les étapes supplémentaires consistant à :
- inspecter la manipulation de l'IUG (figure 4) par un opérateur,
- effectuer une évaluation selon des règles prédéterminées.

11. Procédé selon l'une quelconque des revendications 1 à 10, **caractérisé par** les étapes consistant à :
- évaluer les informations comprises dans les données envoyées au serveur HTTP (21) du moyen de gestion,
- manipuler une fonction commutable selon un ensemble de règles prédéterminées.

12. Procédé selon l'une quelconque des revendications 1 à 11, **caractérisé en ce qu'**un protocole TCP/IP est utilisé pour transmettre lesdites données acquises entre le serveur HTTP (21) et le deuxième système informatique.

13. Procédé selon la revendication 12, **caractérisé en ce que** le protocole http est utilisé sur le protocole TCP/IP pour transmettre lesdites données acquises entre le serveur HTTP (21) et le deuxième système informatique.

14. Procédé selon la revendication 1, **caractérisé en ce que** le système est un réseau de distribution d'énergie électrique (1-7) comprenant un système d'alimentation (5, 6, 7) et ledit moyen de gestion.

15. Procédé selon la revendication 1, **caractérisé en ce que** le système est un système d'alimentation (5, 6, 7) d'un réseau de distribution d'énergie électrique à moyenne tension.

16. Procédé selon la revendication 1, **caractérisé en ce que** lesdites données acquises mises à la disposition dudit deuxième système informatique sont transmises depuis le serveur HTTP (21) dans ledit moyen de gestion par un moyen sans fil.

17. Procédé selon la revendication 1, **caractérisé en ce que** ledit signal distant du processus est transmis dudit deuxième système informatique au serveur HTTP (21) dans ledit moyen de gestion par un moyen sans fil.

18. Procédé selon la revendication 17, **caractérisé en ce que** ledit moyen sans fil comprend un dispositif compatible avec les normes Bluetooth.

19. Procédé selon l'une quelconque des revendications 1 à 17, **caractérisé en ce que** le deuxième système informatique est un ordinateur portable équipé de moyens de communication.

20. Procédé selon la revendication 19, **caractérisé en ce que** les moyens de communication permettent une liaison sans fil entre l'ordinateur portable et un réseau téléphonique public commuté (RTPC), un réseau cellulaire ou un réseau téléphonique basé sur des satellites.

21. Procédé selon la revendication 19, **caractérisé en ce que** le deuxième système informatique se présente sous la forme d'un téléphone portable équipé d'un moyen de communication sans fil.

22. Procédé selon la revendication 21, **caractérisé en ce que** le téléphone portable est un téléphone équipé de manière appropriée du protocole d'applications sans fil (WAP) ou d'un protocole similaire pour afficher des données et accepter des entrées se rapportant à l'affichage.

23. Procédé selon l'une quelconque des revendications 1 à 22, **caractérisé par** l'étape consistant à :
- incorporer des données basées sur lesdites données acquises dans un document XML.

24. Système permettant de superviser et de commander un système de production, de transport et de distribution d'électricité, comprenant un moyen d'acquisition de données (30) et un moyen de gestion (20, 28), comprenant un moyen donnant la fonction suivante : les données acquises pour au moins une caractéristique du système sont examinées et un signal de commande proche du processus est généré par le moyen de gestion (20, 28), lesdites données acquises sont incorporées dans un document HTML (24) et mises à la disposition d'un deuxième système informatique dans ledit moyen de gestion et un signal de commande distant du processus dépendant en partie desdites données acquises incorporées dans ledit document HTML (24) est généré à partir dudit deuxième système informatique, **caractérisé par** un moyen permettant :
- d'inspecter avec un deuxième programme informatique les données envoyées vers un serveur HTTP (21) du moyen de gestion,
- d'évaluer avec le deuxième programme informatique une entrée effectuée par un opérateur comprise dans les données envoyées au serveur HTTP du moyen de gestion,
- de générer avec ledit moyen de gestion ledit signal de commande proche du processus.

25. Système selon la revendication 24, **caractérisé en ce que** :
- ledit moyen de programme informatique comprend en outre
- une interface de programmation d'Acquisition de Données (26) et
- le moyen de code HTML comprend une Interface Utilisateur Graphique permettant l'affichage (figure 4), l'inspection par l'utilisateur et la manipulation sur le deuxième système informatique.

26. Système selon la revendication 24, **caractérisé en ce que** le moyen de code HTML est adapté avec une appliquette (23) pour fournir un affichage écran sur le deuxième ordinateur.

27. Système selon la revendication 24, **caractérisé en ce que** lesdites données de système sont adaptées pour pouvoir être transmises en employant le protocole TCP/IP.

28. Système selon la revendication 24, **caractérisé en ce que** lesdites données acquises sont adaptées pour pouvoir être transmises en employant le protocole http sur le protocole TCP/IP.

29. Système selon la revendication 24, **caractérisé en ce que** :
- l'appliquette (23) est adaptée pour envoyer un signal de commande distant du processus dépendant de la manipulation par l'utilisateur de l'Interface Utilisateur Graphique (figure 4),
- ledit signal de commande proche du processus est généré par ledit moyen de gestion (20, 28) en fonction du signal de commande distant du processus envoyé par l'appliquette.

30. Système selon la revendication 24, **caractérisé en ce que** le deuxième ordinateur comprend un téléphone portable équipé d'un moyen de communication sans fil.

31. Système selon la revendication 30, **caractérisé en ce que** le téléphone portable est un téléphone équipé de manière appropriée du protocole d'applications sans fil (WAP) ou d'un protocole similaire pour afficher des données et accepter des entrées se rapportant à l'affichage.

32. Système selon la revendication 24, **caractérisé en ce que** le moyen de gestion (20, 28) est un dispositif de calcul électronique ou un système de dispositifs d'un réseau de distribution électrique (1-7).

33. Système selon la revendication 24, **caractérisé en ce que** le moyen de gestion est un contrôleur logique programmable (PLC) ou une unité déportée (RTU) (20).

34. Système selon la revendication 24, **caractérisé en ce que** le moyen de gestion est un ordinateur personnel (PC).

35. Système selon la revendication 24, **caractérisé en ce que** le moyen de gestion est un contrôleur intégré.

36. Système selon la revendication 24, **caractérisé en ce que** le moyen de gestion comprend un moyen de communication sans fil.

37. Système selon la revendication 36, **caractérisé en ce que** le moyen de communication sans fil est compatible avec les normes Bluetooth.

38. Système selon la revendication 24, **caractérisé en ce que** le système de distribution électrique est un système d'alimentation (5, 6, 7) d'un réseau de distribution d'énergie électrique à moyenne tension.

39. Système selon la revendication 24, **caractérisé en ce que** les données acquises et les données calculées sont adaptées pour pouvoir être transmises dans un document XML.

40. Procédé selon les revendications 1 à 23, **caractérisé par** le fait d'employer un opérateur humain pour superviser et commander un système d'énergie électrique.

41. Procédé selon les revendications 1 à 23, **caractérisé par** le fait d'employer un opérateur humain pour superviser et commander un système d'alimentation (5, 6, 7) dans un réseau de distribution d'énergie électrique.

42. Procédé selon les revendications 1 à 23, **caractérisé par** le fait d'envoyer un signal distant du processus au moyen de gestion, lequel signal distant du processus est indépendant des donnés acquises.

43. Procédé selon les revendications 1 à 23, **caractérisé par** le fait d'utiliser un deuxième programme informatique fonctionnant au moins en partie dans le deuxième système informatique.

44. Programme informatique permettant la supervision et la commande un système de production, de transport et de distribution d'énergie électrique, comprenant un moyen de programme informatique, un moyen de code et de logiciel de programme informatique, ledit programme informatique, lorsqu'il est exécuté sur un ordinateur ou un processeur, faisant mettre en oeuvre par l'ordinateur ou le processeur un procédé selon l'une quelconque des revendications 1 à 22.

45. Système selon la revendication 24, comprenant une interface utilisateur graphique (figure 4) pour la présentation et la manipulation d'informations sur un écran d'ordinateur de données acquises à partir d'un système permettant la supervision et la commande d'un équipement de production, de transport et de distribution d'électricité, comprenant un moyen d'acquisition de données (30), un moyen de calcul, un moyen de programme informatique et un moyen de gestion (20, 28), lesdites données acquises comprenant une caractéristique (41-48) du système d'énergie électrique incluant une représentation (41-43) d'un état d'une fonction commutable qui peut être supervisée et évaluée et qui peut être commandée en employant un moyen d'IUG (23) depuis un deuxième système informatique.

46. Programme informatique selon la revendication 44, inclus sur un support lisible par un ordinateur.

47. Procédé selon les revendications 1 à 23, **caractérisé par** le fait de générer un signal de communication de données incorporé dans un format de document HTML (24) pour présenter et manipuler des données provenant d'un système de production, de transport et de distribution d'énergie électrique acquises par un moyen de gestion.

48. Procédé selon la revendication 47, **caractérisé en ce que** le signal de communication de données comprend un document en format XML.

49. Procédé selon la revendication 47, **caractérisé en ce que** le signal de communication de données comprend un signal distant du processus pour transmettre une action de commande entre un deuxième ordinateur et un moyen de gestion.

50. Procédé selon la revendication 47, **caractérisé en ce que** le signal de communication de données comprend un signal proche du processus généré par un moyen de gestion pour exécuter une action de commande.
